# EUROPEAN PATENT APPLICATION

(11) **EP 0 819 957 A1**
(43) Date of publication of application: **21.01.1998**
(21) Application number: 97112095.1
(22) Date of filing: 15.07.1997
(51) Int. Cl.: G02B 6/245

(54) **Stripper tool apparatus**

(30) Priority: 15.07.1996 US 680759
(71) Applicant: AT&T Corp., New York, NY 10013-2412 (US)
(72) Inventor: Stathum, Raymond, Neptune, New Jersey 07753 (US)
(74) Representative: KUHNEN, WACKER & PARTNER

(57) **Abstract**

A stripper tool apparatus is adapted for removing material adhering to an outside surface of a cord-like structure and includes a clamp assembly and a blade assembly. The clamp assembly extends along a longitudinal axis and has a first clamp member defining a first surface and a second clamp member defining a second surface disposed opposite said first surface to define a thickness of a sidewall therebetween. The first and second clamp members are releasably engageable to each other. The clamp assembly has at least one guide hole extending through and between the sidewall and the first surface and an outlet formed into the second surface at a depth sufficient to communicate with the guide hole. The guide hole is sized to receive the cord-like structure and the material associated therewith and the outlet is sized to receive at least a portion of the material. The blade assembly includes a blade holder and a blade element having a cutting edge and releasably connected to the blade holder. The blade assembly is sized and adapted to be releasably clamped between the first and second clamp members in a manner whereby the cutting edge of the blade element transversely confronts the guide hole so that, when the cord-like structure and the material associated therewith advance through the guide hole, the cutting edge cuts at least a portion of the material from the outer surface of the cord-like structure and directs the cut portion of the material through the outlet while the cord-like structure continues to advance through the guide hole.

## Description

### Background of the Invention

### 1. Field of the Invention

The present invention is related to a stripper tool apparatus that is adapted for removing material associated with an outside surface of a cord-like structure. More particularly, the present invention is directed to a stripper tool apparatus for removing material such as an insulation coating on a wire or UV matrix residue on optical fiber that adheres to an outside surface of the wire or optical fiber.

### 2. Description of Related Art

Typically fiber optic cable includes either 24, 48 or 72 strands of optical fibers which are hereinafter referred to as "optical fibers." Each of the optical fibers are coated with a UV coating which, among other benefits, color codes each of the optical fibers in the fiber optic cable. The optical fibers are placed around a kingwire in at least two concentric rings. Then, a UV acrylate, also referred to as "UV matrix", is applied to surround the outer concentric ring of optical fibers.

A problem arises when two ends of a fiber optic cable require splicing. The problem is associated with UV matrix remaining as residue on portions of the outer surfaces of the optical fibers that constitute the outer concentric ring. This residue adheres to the outer surface of these optical fibers because the composition of UV acrylate is substantially similar to the UV coating of the optical fiber. For splicing purposes, at least 60 inches of each optical fiber must be free of any UV matrix residue.

Presently, maintenance personnel must inspect each of the optical fibers for UV matrix residue and, when encountered, the UV matrix residue is removed by a cutting tool such as a knife or razor blade. The cutting tool has an exposed cutting edge that presents a hazardous working condition for maintenance personnel. Also, manipulating the cutting tool must occur with extreme precision or a 60 inch length of optical fiber can be severed. If this occurs, the splicing process must begin again. Also, electrical wire typically includes an insulation coating wrapped therearound. Sometimes, it is difficult to strip the insulation coating from the wire in a safe manner.

Thus, there is a need in industry for a new and improved stripper tool apparatus so that undesirable material adhering to an outer surface of a cord-like structure, like optical fiber and insulated wire, can be removed safely.

It would be advantageous if the stripper tool apparatus includes a blade with a cutting edge whereby a user could not self-inflict a wound when operating the stripper tool apparatus.

It would be advantageous if the stripper tool apparatus is compact, lightweight and simple and inexpensive to manufacture and use.

### Summary of the Invention

It is an object of the present invention to provide a stripper tool apparatus that can be used for removing material associated with or adhering to an outside surface of a cord-like structure such as insulated wire and optical fiber.

It is another object of the present invention to provide a stripper tool apparatus whereby a razor-sharp cutting edge can be used without endangering the user of self-inflicting a wound.

It is yet another object of the present invention to provide a hand-operated stripper tool apparatus that is compact, lightweight, and simple and easy to manufacture and use.

Accordingly, a stripper tool apparatus is hereinafter described. In its broadest form, the stripper tool apparatus of the present invention is adapted for removing material associated with an outside surface of a cord-like structure and includes a body member and a blade element. The body member extends along a longitudinal axis and has a first surface and an opposite second surface. The first surface and the second surface define a thickness of a sidewall therebetween. The body member also has at least one guide hole that extends through and between the sidewall and the first surface and has an outlet formed into the second surface at a depth sufficient to communicate with the guide hole. The guide hole is sized to receive the cord-like structure and the material associated with the cord-like structure. The outlet is sized to receive at least a portion of the material.

The blade element has a cutting edge and is releasably secured to the body member in a manner whereby the cutting edge transversely confronts the guide hole. When the cord-like structure and the material associated with the cord-like structure advance through the guide hole, the cutting edge cuts at least a portion of the material from the outer surface of the cord-like structure and directs the cut portion of the material through the outlet while the cord-like structure continues to advance through the guide hole.

It is preferred that the body member includes a first clamp member and a second clamp member which are releasably engageable to each other. It is also preferred that the body member includes a blade holder which is sized and adapted to be secured between the first and second clamp members when the first and second clamp members are releasably engaged to each other. The blade holder releasably retains the blade element transversely to the guide hole when the first and second clamp members are releasably engaged to each other.

### Brief Description of the Drawings

These and other objects of the present invention will become more readily appreciated and understood from consideration of the following detailed description of the preferred embodiment of the present invention when taken in conjunction with the accompanying drawings, in which:
Figure 1 is a perspective view of a stripper tool apparatus of the present invention;
Figure 2 is a cross-sectional side elevation view of the first clamp member taken along lines 2-2 in Figure 1 and a side elevational view of a blade holder of the stripper tool apparatus of the present invention;
Figure 3 is an exploded perspective view of the stripper tool apparatus of the present invention;
Figure 4 is a top plan view of a first clamp member of the stripper tool apparatus of the present invention; and
Figure 5 is a front elevational view of the stripper tool apparatus of the present invention.

### Detailed Description of Preferred Embodiments

A stripper tool apparatus of the present invention is adapted for removing material associated with an outside surface of a cord-like structure. One of ordinary skill in the art would appreciate that the cord-like structure can be wire or optical fiber. Further, a skilled artisan would appreciate that the material associated with the outside surface of the cord-like structure would typically be an insulation coating disposed around the wire or UV matrix residue adhering to the outer surface of the optical fiber. Although the description of the preferred embodiment proceeds by explaining removal of UV matrix residue from optical fiber, it is understood that any undesirable material of a type described above adhering to an outside surface of cord-like structures can be removed by using the stripper tool apparatus of the present invention.

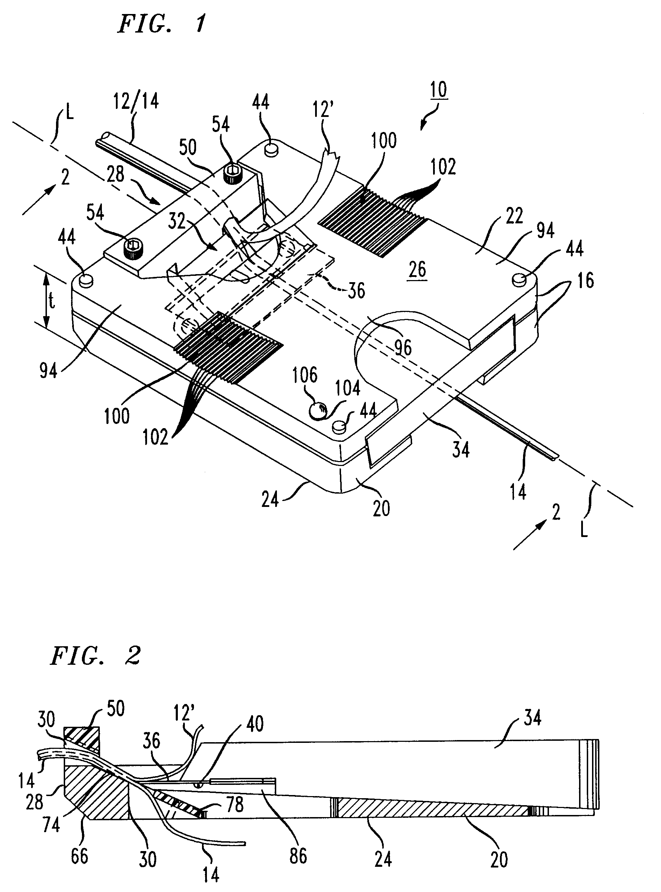

A stripper tool apparatus 10 of the present invention is generally introduced in Figures 1-5. As best shown in Figures 1 and 2, the stripper tool apparatus 10 is adapted for removing material 12 adhering to an outside surface of a cord-like structure 14. The stripper tool apparatus 10 is a body member that includes a clamp assembly 16 and a blade assembly 18.

The clamp assembly 16 extends along a longitudinal axis "L". The clamp assembly 16 includes a first clamp member 20 and a second clamp member 22. The first clamp member 20 defines a first surface 24 and the second clamp member 22 defines a second clamp surface 26 which is disposed opposite of the first clamp surface 24. Thus, the first clamp surface 24 and the second clamp surface 26 define a thickness "t" of a sidewall 28 that is disposed between the first clamp surface 24 and the second clamp surface 26. The first and second clamp members 20 and 22 are releasably engageable to each other. The clamp assembly 16 has a guide hole 30 which extends through and between the sidewall 28 and the first clamp surface 24. One of ordinary skill in the art would appreciate that a plurality of guide holes can be used for the present invention such as, by way of example only, an additional guide hole 30'. The clamp assembly 16 also has an outlet 32 which is formed into the second clamp surface 24 at a depth sufficient to communicate with the guide hole 30. As best shown in Figures 1 and 2, the guide hole 30 is sized to receive the cord-like structure 14 and the material 12 that is associated with the cord-like structure 14. The outlet 32 is sized to receive at least a portion of the material 12 as is shown in Figures 1 and 2.

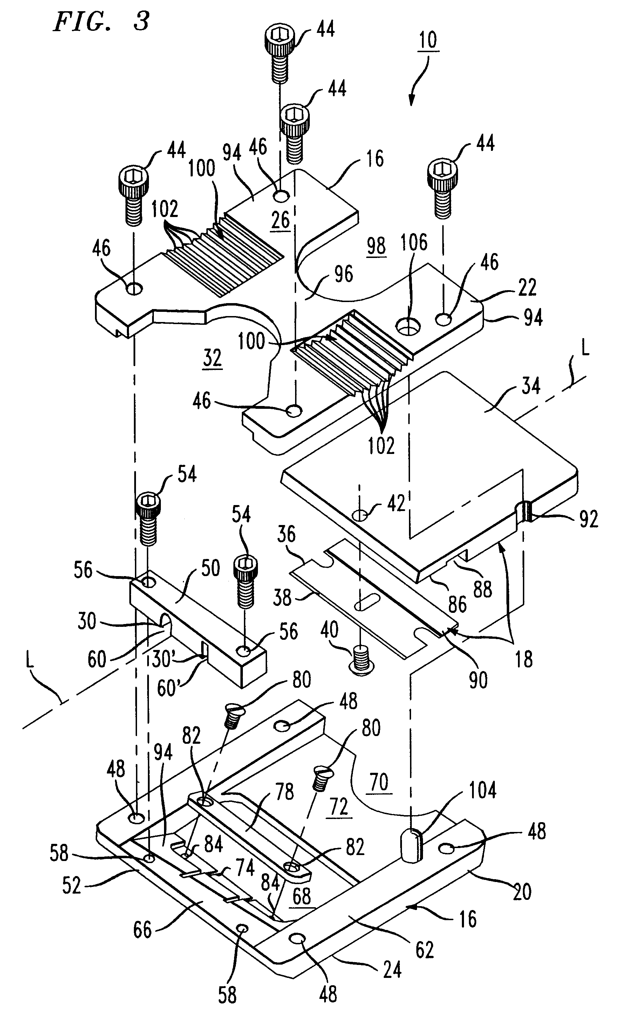

The blade assembly 18 includes a blade holder 34 and a blade element 36 that has a cutting edge 38. The blade element 36 is releasably connected to the blade holder 34 by a screw 40 that matably engages a threaded hole 42 formed in the blade holder 34 as shown in Figure 3. The blade assembly 18 is sized and adapted to be received in and releasably clamped between the first and second clamp members 20 and 22 as shown in Figure 1. Although not by way of limitation, the first and second clamp members 20 and 22 are releasably engageable to each other by a set of cap screws 44 that extend through holes 46 formed in the second clamp member 22 that register with threaded holes 48 formed in the first clamp member 20.

When the first and second clamp members 20 and 22 are engaged and clamp the blade assembly 18 therebetween, the cutting edge 38 of the blade element 36 transversely confronts the guide hole 30. Now, when the cord-like structure 14 and the material 12 that is associated with the cord-like structure 14 advance through the guide hole 30, the cutting edge 38 cuts at least a portion of the material 12 from the outer surface of the cord-like structure 14 and directs the cut portion 12' of the material 12 through the outlet 32 while the cord-like structure 14 continues to advance through the guide hole 30.

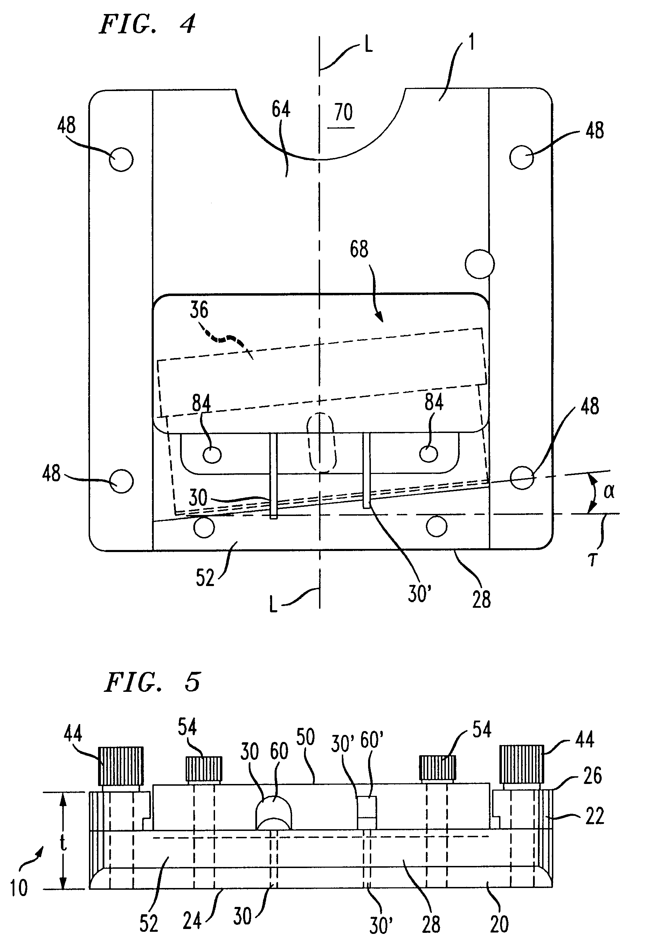

As best shown in Figures 1-3 and 5, the sidewall 28 includes a guide block member 50 that extends transversely to the longitudinal axis "L". The guide block member 50 is releasably connected to a forward end portion 52 of the first clamp member 20 by a pair of screws 54 that extend into guide block holes 56 and into threaded first member holes 58. The guide block member 50 includes an entry portion 60 of the guide hole 30. Correspondingly, the guide block member 50 would also include an entry portion 60' of the guide hole 30' as best shown in Figures 3 and 5.

In Figure 3, the first clamp member 20 includes a pair of laterally extending rails 62 which are disposed opposite one another relative to the longitudinal axis "L". The rails 62 are interconnected by a rear cross panel 64 and a forward cross bar 66 which are separated from one another by a first member opening 68. The rear cross panel 64 includes a rearwardly facing U-shaped channel 70. The rear cross panel 64 and respective rear portions of the rails 62 define a truncated, wedge-shaped channel 72 that is sized and adapted to releasably receive a portion of the blade holder 34.

As best shown in Figures 2 and 3, the forward cross bar 66 includes a beveled wall 74. The beveled wall 74 extends downwardly and rearwardly relative to the guide block member 50, as best shown in Figure 2. An exit portion 76 of the guide hole 30 is formed into the forward cross bar 66 and extends through the beveled wall 74. A guide plate 78 is disposed in a cross bar recess which is formed into the beveled wall 74 and is releasably connected to the forward cross bar 66 by a pair of screws 80. Screws 80 extend through guide plate holes 82 and into threaded holes 84 that are formed into forward cross bar 66.

Although not by way of limitation, the cutting edge 38 of the blade element 36 is oriented at an acute angle "a" relative to a transverse axis "T" as shown in Figure 4. The transverse axis "T" extends perpendicularly to the longitudinal axis "L".

As shown in Figures 2 and 3, the blade holder 34 includes a recess 86 that is sized to receive a non-cutting portion of the blade element 36. For the preferred embodiment, the blade holder 34 includes a second recess 88 which is sized to receive an edge cover 90 of the blade element 36. This recess arrangement facilitates the releasable connection of the blade element 36 to the blade holder 34 in a manner so that the blade element 86 is flush with the blade holder 34.

The blade holder 34 includes a pilot notch 92 which is formed on an outer periphery of the blade holder 34. The pilot notch 92 extends perpendicularly relative to the transverse axis "T" and the longitudinal axis "L" when the blade holder 34 is secured between the first and second clamp members 20 and 22. As best shown in Figure 2, the blade holder 34 has a cross-sectional shape in a form of a truncated wedge.

With reference to Figures 1 and 3, the second clamp member 22 includes a pair of longitudinally extending beams 94 that are laterally disposed apart from one another on opposite sides of the longitudinal axis "L". The beams 94 are interconnected by a cross beam 96 to form an H-shaped configuration. In turn, the H-shaped configuration yields a second clamp rearwardly facing U-shaped channel 98 and a second clamp forwardly facing channel which is the outlet 32.

When the first and second clamp members 20 and 22 are releasably engaged to one another, the outlet 32 communicates with the guide hole 30 as best shown in Figure 1. The outlet 32 is sized to receive the guide block member 50 when the guide block member is releasably connected to the first clamp member 20 and the first and second clamp members 20 and 22 are releasably engaged to one another.

The second clamp member also includes a pair of arcuate recesses 100. A plurality of serrations 102 are formed in each of the arcuate recesses 100 and extend in a transverse direction relative to the longitudinal axis "L". By way of example only, each of the arcuate recesses 100 is disposed on opposite sides of longitudinal axis "L" and centrally of beams 94.

With reference to Figures 1 and 3, the first clamp member 20 includes a dowel 104 and the second clamp member 22 includes a pilot hole 106. As stated above, blade holder 34 includes the pilot notch 92. The pilot hole 106 and the pilot notch 92 are sized to slidably receive the dowel 104. The pilot hole 106 and the pilot notch 92 are oriented on respective ones of the second clamp member 22 and the blade holder 34 so that they can align in registration with the dowel 104 or the clamp member 20 prior to when the blade assembly 18 is releasably clamped between the first and second clamp members 20 and 22.

A skilled artisan would appreciate that the stripper tool apparatus of the present invention can remove undesirable material from a cord-like structure. The cord-like structure can be either optical fiber or insulated wire. The material can be the insulation on the wire or UV matrix residue on optical fiber. A skilled artisan would appreciate that the stripper apparatus of the present invention can be used safely without the risk of self-inflicting a wound during its use. Further, the stripper tool apparatus of the present invention is compact, lightweight and is simple and easy to manufacture, use, assemble and disassemble.

Accordingly, the description of the present invention has been directed to the preferred embodiment. It should be appreciated that the present invention is defined by the following claims construed in light of the prior art so that modifications or changes can be made to the preferred embodiment of the present invention without departing from the inventive concepts contained herein.

## Claims

1. A stripper tool apparatus adapted for removing material associated with an outside surface of a cord-like structure, characterized by:
a body member extending along a longitudinal axis and having a first surface and an opposite second surface defining a thickness of a sidewall therebetween, said body member having at least one guide hole extending through and between said sidewall and said first surface and an outlet formed into said second surface at a depth sufficient to communicate with said guide hole, said guide hole sized to receive the cord-like structure and the material associated therewith, said outlet sized to receive at least a portion of the material; and
a blade element having a cutting edge and releasably secured to said body member in a manner whereby said cutting edge transversely confronts said guide hole so that, when the cord-like structure and the material associated therewith advance through said guide hole, said cutting edge cuts at least a portion of the material from the outer surface of the cord-like structure and directs the cut portion of the material through said outlet while the cord-like structure continues to advance through said guide hole.

2. A stripper tool apparatus according to claim 1, characterized in that said body member includes a first clamp member defining said first surface and a second clamp member defining said second surface, said first and second clamp members releasably engageable to each other.

3. A stripper tool apparatus according to claim 2, characterized in that said body member includes a blade holder sized and adapted to be secured between said first and second clamp members when said first and second clamp members are releasably engaged to each other, said blade holder operative to releasably retain said blade element transversely to said guide hole when said first and second clamp members are releasably engaged to each other.

4. A stripper tool apparatus according to claim 3, characterized in that said blade holder includes a recess sized to receive a non-cutting portion of said blade element whereby said cutting edge of said blade element is oriented at an acute angle relative to a transverse axis extending perpendicularly to said longitudinal axis.

5. A stripper tool apparatus according to claim 3, characterized in that said blade holder is shaped in cross-section as a truncated wedge.

6. A stripper tool apparatus according to claim 3, characterized in that said blade holder includes a pilot notch formed on an outer periphery of said blade holder and extending perpendicularly to said transverse axis and said longitudinal axis when said blade holder is secured between said first and second clamp members.

7. A stripper tool apparatus according to claim 2, characterized in that said sidewall includes a guide block member extending transversely to said longitudinal axis, said guide block member including an entry portion of said guide hole.

8. A stripper tool apparatus according to claim 7, characterized in that said guide block member is releasably connected to said first clamp member.

9. A stripper tool apparatus according to claim 2, characterized in that one of said first and second clamp members includes a dowel and a remaining one of said first and second clamp members includes a pilot hole sized to slidably receive said dowel, said dowel and pilot hole oriented on respective ones of said first and second clamp members so that said first and second clamp members can align in facial registration with one another prior to engagement.

10. A stripper tool apparatus according to claim 1 characterized in that the cord-like structure is one of a wire and an optical fiber.

11. A stripper tool apparatus according to claim 10 characterized in that the material associated with the cord-like structure is one of an insulation coating and UV matrix residue.

12. A stripper tool apparatus adapted for removing material adhering to an outside surface of a cord-like structure, characterized by:
a clamp assembly extending along a longitudinal axis and having a first clamp member defining a first surface and a second clamp member defining a second surface disposed opposite said first surface to define a thickness of a sidewall therebetween, said first and second clamp members releasably engageable to each other, said clamp assembly having at least one guide hole extending through and between said sidewall and said first surface and an outlet formed into said second surface at a depth sufficient to communicate with said guide hole, said guide hole sized to receive the cord-like structure and the material associated therewith, said outlet sized to receive at least a portion of the material; and
a blade assembly including a blade holder and a blade element having a cutting edge and releasably connected to said blade holder, said blade assembly sized and adapted to be releasably clamped between said first and second clamp members in a manner whereby said cutting edge of said blade element transversely confronts said guide hole so that, when the cord-like structure and the material associated therewith advance through said guide hole, the cutting edge cuts at least a portion of the material from the outer surface of the cord-like structure and directs the cut portion of the material through said outlet while the cord-like structure continues to advance through said guide hole.

13. A stripper tool apparatus according to claim 12, characterized in that said sidewall includes a guide block member extending transversely to said longitudinal axis and releasably connected to a forward end portion of said first clamp member, said guide block member including an entry portion of said guide hole.

14. A stripper tool apparatus according to claim 13, characterized in that the first clamp member includes a pair of laterally extending rails that are disposed opposite one another relative to said longitudinal axis and that are interconnected by a forward cross bar, the laterally extending rails being separated from one another by a first member opening therebetween.

15. A stripper tool apparatus according to claim 12, characterized in that said cutting edge of said blade element is oriented at an acute angle relative to a transverse axis extending perpendicularly to said longitudinal axis.

16. A stripper tool apparatus according to claim 12, characterized in that said blade holder includes a recess sized to receive a non-cutting portion of said blade element.

17. A stripper tool apparatus according to claim 12, characterized in that said blade holder includes a pilot notch formed on an outer periphery of said blade holder and extending perpendicularly to said transverse axis and said longitudinal axis when said blade holder is secured between said first and second clamp members.

18. A stripper tool apparatus according to claim 12, characterized in that said second clamp member includes a pair of longitudinally extending beams laterally disposed apart from one another on opposite sides of said longitudinal axis and interconnected by a cross beam, said outlet being formed between said longitudinally extending beams.

19. A stripper tool apparatus according to claim 12, characterized in that said second clamp member includes a pair of arcuate recesses with a plurality of serrations formed therein and extending in a transverse direction relative to said longitudinal axis, each of said arcuate recesses disposed on opposite sides of said longitudinal axis.

20. A stripper tool apparatus according to claim 12, further characterized by a dowel disposed on one of said first and second clamp members, a pilot hole disposed on a remaining one of said first and second clamp members and one of a pilot hole and a pilot notch formed in a peripheral portion of said blade holder, said pilot hole on one of the first and second clamp members and said one of a pilot hole and a pilot notch of said blade holder being sized to slidably receive said dowel so that said blade assembly and respective ones of said first and second clamp members align in facial registration with one another prior to said blade assembly being releasably clamped between said first and second clamp members.
